# EUROPÄISCHE PATENTSCHRIFT

(11) **EP 1 160 425 B1**
(45) Veröffentlichungstag und Bekanntmachung des Hinweises auf die Patenterteilung: **29.06.2005**
(21) Anmeldenummer: 01108249.2
(22) Anmeldetag: 31.03.2001
(51) Int. Cl.: F02D 41/02

(54) **Verfahren und Vorrichtung zur Durchführung einer Regeneration eines NOx-Speicherkatalysators**
Method and apparatus to for regeneration of an NOx storage catalyst
Méthode et procédé pour la régénération d'un catalyseur à stockage de NOx

(30) Priorität: 27.05.2000 DE 10026379
(43) Veröffentlichungstag der Anmeldung: 05.12.2001
(73) Patentinhaber: Volkswagen Aktiengesellschaft, 38436 Wolfsburg (DE)
(72) Erfinder: Hahn, Hermann, 30175 Hannover (DE); Pott, Ekkehard, Dr., 38518 Gifhorn (DE)

(56) Entgegenhaltungen:
- DE-A- 19 801 815
- DE-A- 19 808 382
- FR-A- 2 772 428

## Beschreibung

Die Erfindung betrifft ein Verfahren zur Durchführung einer Regeneration eines NOₓ-Speicherkatalysators im Abgasstrang einer Verbrennungskraftmaschine mit den im Oberbegriff des Anspruchs 1 genannten Merkmalen sowie eine Vorrichtung zur Durchführung der Regeneration mit den im Oberbegriff des Anspruchs 10 genannten Merkmalen.

Zur Reinigung eines Abgases von Verbrennungskraftmaschinen ist es bekannt, Partikelfilter oder Katalysatorsysteme im Abgasstrang derselben anzuordnen. Letztere umfassen einerseits Oxidationskatalysatoren, die eine Oxidation von Reduktionsmitteln, wie unvollständig verbrannte Kohlenwasserstoffe HC, Kohlenmonoxid CO und Wasserstoff H₂, unterstützen und andererseits Reduktionskatalysatoren, an denen Stickoxide mit den Reduktionsmitteln umgesetzt werden können. Optimale Konvertierungsraten lassen sich nur unter Einhaltung spezifischer Randbedingungen erzielen. So ist es beispielsweise notwendig, die Katalysatoren in bestimmten Temperaturfenstem zu betreiben. Weiterhin müssen selbstverständlich die zur Umsetzung der Schadstoffkomponenten benötigten Reaktionspartner in einem ausreichenden Maße zur Verfügung gestellt werden. Dies kann dann problematisch werden, wenn die Verbrennungskraftmaschine im Zuge verbrauchsoptimierter Maßnahmen überwiegend in einem Magermodus betrieben wird. Unter solchen Bedingungen ist ein Reduktionsmittelmassenstrom sehr gering, so dass eine vollständige Konvertierung von Stickoxiden NOₓ nicht mehr gelingt.

Zur Abhilfe ist es bekannt, dem Reduktionskatalysator einen NOₓ-Speicher beizuordnen, der in mageren Betriebsphasen das NOₓ als Nitrat einlagern kann. Speicher und Katalysator können zu einem sogenannten NOₓ-Speicherkatalysator zusammengefasst werden. Eine NOₓ-Speicherfähigkeit hängt unter anderem von den im Abgasstrang herrschenden Temperaturen, aber auch vom Beladungszustand des NOₓ-Speicherkatalysators ab. Um NOₓ-Durchbrüche zu vermeiden, muss der NOₓ-Speicherkatalysator in regelmäßigen Abständen regeneriert werden. Eine solche Regeneration wird durch einen Wechsel in einen fetten oder stöchiometrischen Arbeitsmodus der Verbrennungskraftmaschine initiiert. Infolgedessen steigt der Reduktionsmittelmassenstrom an und es kommt zu einer katalytischen Zersetzung der als Nitrat eingelagerten Stickoxide im NOₓ-Speicherkatalysator.

Bei Verwendung schwefelhaltiger Kraftstoffe entstehen während des Verbrennungsvorgangs Schwefeloxide SOₓ. Auch das SOₓ wird durch die Speicherkomponente sorbiert. Aufgrund der hohen thermodynamischen Stabilität der entstehenden Sulfate sind für eine Regeneration deutlich höhere Temperaturen notwendig, so dass gegebenenfalls Heizmaßnahmen eingeleitet werden müssen. NOₓ-und SOₓ-Regenerationen finden dabei prinzipiell in gleicher Atmosphäre statt.

Eine Vorgabe der Regenerationsparameter erfolgt nach den herkömmlichen Verfahren prinzipiell auf zwei verschiedenen Wegen. Zum einen sind Modelle entwickelt worden, mit denen ein Katalysatorzustand berechnet wird. Als Eingangsgrößen für derartige Modelle können Signale einer im Abgasstrang angeordneten Sensorik genutzt werden. So kann beispielsweise mit Hilfe von Lambdasonden, NOₓ-Sensoren oder Temperaturfühlem ein Ist-Zustand des NOₓ-Speicherkatalysators direkt oder indirekt erfasst werden. Ferner lassen sich auch Verbrennungsparameter ermitteln, die Auskunft über die während der Verbrennung herrschenden Gasvolumenströme und Einspritzparameter geben. Letztere umfassen unter anderem einen Zündzeitpunkt und eine eingespritzte Kraftstoffmasse. Aus allen diesen Größen kann dann ein theoretischer Beladungsgrad mit NOₓ und SOₓ berechnet werden. Ausgehend von diesem theoretischen Beladungsgrad werden dann die Regenerationsparameter festgelegt. In der FR 2 772 428 A1 wird hierzu eine Vorgehensweise dargestellt bei der die Regeneration eines NOₓ-Speicherkatalysators abhängig von einer Effizienz des Speicherkatalysators durchgeführt wird. Die Effizienz des Speicherkatalysators wird dabei basierend auf einem Füllgrad des Speicherkatalysators ermittelt, um so eine möglichst genau bemessene Regeneration zu erreichen. Eine solche Vorgehensweise kann unter Umständen trotzdem dazu führen, dass eine Regenerationsdauer zu kurz oder zu lang gewählt wird. Im ersteren Falle resultiert für den nächsten Speicherzyklus ein verschlechtertes Einspeichervermögen und im zweiten Falle kann es zur Emission von umweltschädigenden Reduktionsmitteln kommen.

Zum anderen sind Verfahren bekannt, bei denen mit Hilfe der im Abgasstrang angeordneten Sensorik die Regeneration geregelt oder gesteuert wird. Dabei wird im Allgemeinen wieder auf ein stromab des NOₓ-Speicherkatalysators durch eine gassensitive Messeinrichtung bereitgestelltes Messsignal zurückgegriffen. Eine solche gassensitive Messeinrichtung kann beispielsweise eine Lambdasonde oder ein reduktionsmittelspezifischer Gassensor sein. Wenn gegen Ende der Regeneration das Signal über einen vorgebbaren Schwellenwert steigt, wird die Regeneration abgebrochen und im Allgemeinen ein magerer Arbeitsmodus der Verbrennungskraftmaschine vorgegeben. Eine solche Vorgehensweise hat jedoch den Nachteil, dass nur mit einer gewissen Zeitverzögerung auf die im NOₓ-Speicherkatalysator auftretenden Änderungen reagiert werden kann. Da der Abgasstrang zwischen der Verbrennungskraftmaschine und dem NOₓ-Speicherkatalysator noch mit einem fetten Abgas gefüllt ist, kommt es auch in diesem Falle zu einem Reduktionsmitteldurchbruch. Dies ist insbesondere unter dem Aspekt wichtig, dass bei den herkömmlichen Verfahren die Regeneration unter stark fetten Bedingungen durchgeführt wird, um eine Regenerationsdauer möglichst gering zu halten und damit hohe Reduktionsmitteldurchbrüche in Kauf genommen werden müssen.

Aufgabe der vorliegenden Erfindung ist es daher, ein Verfahren und eine geeignete Vorrichtung zur Durchführung des Verfahrens zur Verfügung zu stellen, mit denen die Regeneration des NOₓ-Speicherkatalysators zügig, aber auch unter Vermeidung von Reduktionsmitteldurchbrüchen durchgeführt werden können.

Erfindungsgemäß wird diese Aufgabe durch das Verfahren zur Durchführung der Regeneration des NOₓ-Speicherkatalysators mit den im Anspruch 1 genannten Merkmalen sowie die zugehörige Vorrichtung nach den im Anspruch 10 genannten Merkmalen gelöst. Dadurch, dass nach dem Verfahren
(a) die Regeneration in einer ersten Phase unter Vorgabe eines Reduktionsmittelmassenstroms durchgeführt wird, der anhand eines modellierten Katalysatorzustandes vor Einleitung der Regeneration bestimmt wird, wobei eine Dauer der ersten Phase derart festgelegt wird, dass sie zu einer Teilregeneration entsprechend einem vorgebbaren Bruchteil einer berechneten vollständigen Regeneration führt, und
(b) in einer sich anschließenden zweiten Phase ein niedrigerer Reduktionsmittelmassenstrom als während der ersten Phase vorgegeben wird, bis durch eine gassensitive Messeinrichtung stromab des NOx-Speicherkatalysators ein Regenerationsende angezeigt wird,
können die geschilderten Nachteile des Standes der Technik überwunden werden.

Die Vorrichtung umfasst die notwendigen Mittel, mit denen die geschilderten Verfahrensschritte durchgeführt werden können. Die Mittel beinhalten dabei unter anderem eine Steuereinheit, in der ein Programm zur Steuerung der Verfahrensschritte während der Regeneration des NOₓ-Speicherkatalysators in elektronisch lesbarer Form hinterlegt ist. Die Steuereinheit kann bevorzugt in ein zumeist bereits vorhandenes Motorsteuergerät integriert werden.

Nach einer bevorzugten Ausgestaltung des Verfahrens erfolgt eine Steuerung oder Regelung der Reduktionsmittelmassenströme während der Regeneration anhand eines stromauf des NOₓ-Speicherkatalysators gemessenen Lambdawertes (als Führungsgröße). Dabei wird vorzugsweise das Abgas während der ersten Phase auf einen Lambdawert im Bereich von 0,7 bis 0,95, insbesondere 0,75 bis 0,9 eingeregelt. In der zweiten Phase weist das Abgas einen Lambdawert im Bereich von 0,8 bis 1,0, insbesondere 0,9 bis 0,97 auf.

Ferner ist bevorzugt, den Bruchteil zur Bestimmung der Dauer der ersten Phase in Abhängigkeit vom Katalysatorzustand und/oder einer Genauigkeit des zugrunde liegenden Modells zu bestimmen. Dabei liegt der Bruchteil vorzugsweise im Bereich von 50 bis 97 %, insbesondere 80 bis 95 % der berechneten vollständigen Regeneration. Auf diese Weise wird also zunächst während der ersten Phase mit hohen Reduktionsmittelmassenströmen ein Großteil des eingelagerten NOₓ beziehungsweise SOₓ umgesetzt. Um die Reduktionsmitteldurchbrüche möglichst gering zu halten, erfolgt in der zweiten Phase eine deutliche Absenkung des Reduktionsmittelmassenstromes.

Nach einer weiteren bevorzugten Ausgestaltung des Verfahrens wird während der zweiten Phase als Führungsgröße ein Soll-Verlauf mit steigendem Lambdawert stromauf vom NOₓ-Speicherkatalysator vorgegeben. Optional können dabei Maximalwerte für den Soll-Verlauf unter dem Gesichtspunkt einer Emissions- beziehungsweise einer Zeit/Verbrauchsoptimierung gewählt werden. Je nach Erfordernis liegt der Maximalwert dann entweder vor oder erst nach einem Zeitpunkt, an dem voraussichtlich ein Reduktionsmitteldurchbruch zu erwarten ist.

Weitere bevorzugte Ausgestaltungen der Erfindung ergeben sich aus den übrigen, in den Unteransprüchen genannten Merkmalen.

Die Erfindung wird nachfolgend anhand der zugehörigen Zeichnungen in einem Ausführungsbeispiel näher erläutert. Es zeigen:
- Figur 1: eine Prinzipdarstellung einer Verbrennungskraftmaschine mit einem NOₓ-Speicherkatalysator und
- Figur 2: einen zeitlichen Verlauf der Lambdawerte stromab und stromauf des NOₓ-Speicherkatalysators und einer NOₓ-Beladung während der Regeneration.

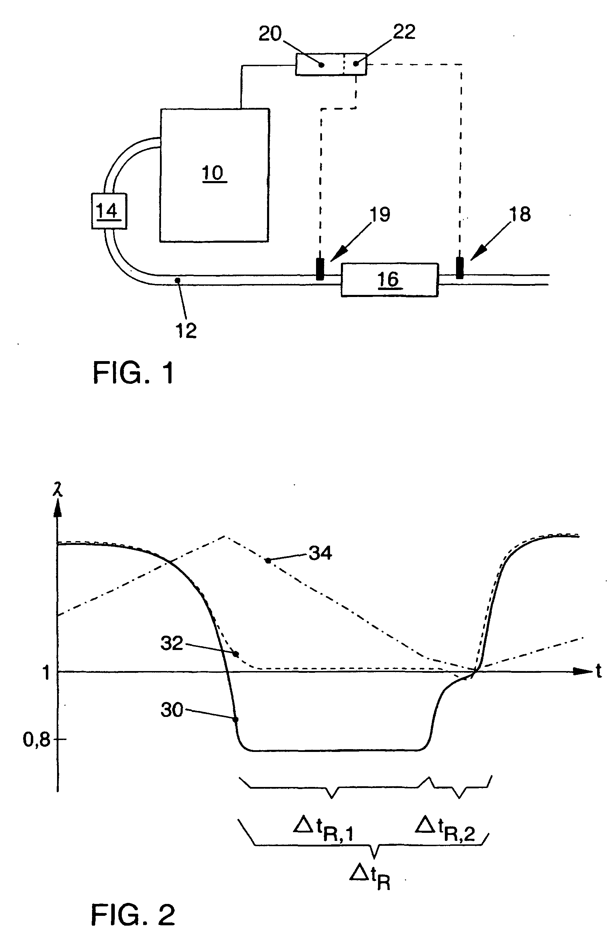

Die Figur 1 zeigt ein Prinzipschaltbild einer Verbrennungskraftmaschine 10, in deren Abgasstrang 12 ein Katalysatorsystem zur Reinigung des Abgases angeordnet ist. Das Katalysatorsystem umfasst einen Vorkatalysator 14 sowie einen NOₓ -Speicherkatalysator 16. Ferner ist der Verbrennungskraftmaschine 10 eine geeignete Mess-/Auswerte- und Steuereinrichtung zugeordnet, mit der es möglich ist, einen Arbeitsmodus vorzugeben. So sind beispielhaft die gassensitiven Messeinrichtungen 18, 19 stromab beziehungsweise stromauf vom NOₓ-Speicherkatalysator aufgeführt. Die Messeinrichtungen 18, 19 liefern Daten, die in ein Motorsteuergerät 20 mit einer noch näher erläuterten Steuereinheit 22 eingelesen werden. In dem Motorsteuergerät 20 können in bekannter Weise Modelle hinterlegt sein, mit denen der Arbeitsmodus der Verbrennungskraftmaschine 10 gesteuert oder geregelt werden kann. Derartige Modelle sind bekannt und sollen daher an dieser Stelle nicht näher erläutert werden.

Als gassensitive Messeinrichtung 18, 19 werden im Folgenden Lambdasonden eingesetzt. Es ist jedoch auch denkbar, reduktionsmittelspezifische Sensoren einzusetzen. Wichtig ist lediglich, dass sich Zustandsgrößen, wie hier eine Konzentration von Kohlenmonoxid CO, unvollständig verbrannter Kohlenwasserstoffe HC, Wasserstoff H₂, Sauerstoff O₂ und/oder Stickoxid NOₓ erfassen lassen. Anhand der genannten Größen kann dann in bekannter Weise auf einen Katalysatorzustand des NOₓ-Speicherkatalysators 16 geschlossen werden und gegebenenfalls eine Regeneration eingeleitet werden.

Sobald Regenerationsnotwendigkeit besteht und die Regeneration frei gegeben wird, findet ein Wechsel in einen fetten Arbeitsmodus der Verbrennungskraftmaschine 10 statt. Ein Verlauf der Lambdawerte stromab und stromauf des NOₓ-Speicherkatalysators 16 sowie ein hypothetischer NOₓ-Beladungszustand lassen sich der Figur 2 entnehmen. Dabei steht die durchgezogene Kurve 30 für das durch die Messeinrichtung 19 stromauf des NOₓ-Speicherkatalysators 16 erfasste Signal. Die gestrichelte Kurve 32 zeigt den Lambdaverlauf stromab des NOₓ-Speicherkatalysators 16, der durch die Messeinrichtung 18 aufgenommen werden kann. Die Kurve 34 skizziert einen theoretischen Verlauf der NOₓ-Beladung, die am Ende der Regeneration bei Null liegen soll.

Zunächst erfolgt in einer ersten Phase Δt_{R,1} eine Vorgabe eines relativ fetten Abgasgemisches. Mit sinkendem Lambdawert steigen erfahrensgemäß auch die Reduktionsmittelmassenströme. Die Vorgabe erfolgt mit Hilfe eines Modells, das einen modellierten Katalysatorzustand vor Einleitung der Regeneration berücksichtigt. Alternativ wäre auch eine direkte Messung der den Katalysatorzustand beschreibende Parameter denkbar, sofern die geeigneten Messeinrichtungen kostengünstig zu Verfügung gestellt werden können. In das Modell fließen unter anderem Größen wie die Gasvolumenströme während der Verbrennung als auch die Einspritzparameter ein. Letztere umfassen eingespritzte Kraftstoffmengen, Zündzeitpunkte, Einspritzdauer und dergleichen. Mit Hilfe dieser Größen kann theoretisch berechnet werden, wie groß der Reduktionsmittelmassenstrom der Verbrennungskraftmaschine 10 in einem bestimmten Betriebspunkt ist. Durch Vergleich mit einem berechneten Beladungszustand des NOₓ-Speicherkatalysators 16 lässt sich dann ein Reduktionsmittelbedarf berechnen. Als Steuerungs- und Regelungsgröße für die Reduktionsmittelmassenströme während der Regeneration kann der durch die Messeinrichtung 19 erfasste Lambdawert herangezogen werden. Ist die theoretisch zur Vervollständigung der Regeneration notwendige Reduktionsmittelmasse bekannt, so lässt sich bei gleichbleibenden Strömungsverhältnissen und damit gleichbleibendem Reduktionsmittelmassenstrom m(dot)_{R,1} eine theoretische Gesamtdauer der Regeneration Δt_{R,th} berechnen.

Eine Dauer der ersten Phase Δt_{R,1} wird nun derart festgelegt, dass sie lediglich zu einer Teilregeneration entsprechend einem vorgebbaren Bruchteil F einer berechneten vollständigen Regeneration führt. Der Bruchteil F wird in Abhängigkeit vom Katalysatorzustand und/oder einer Genauigkeit des zugrunde liegenden Modells bestimmt. Hat beispielsweise das Modell eine Genauigkeit von ± 10 % für die einbeziehungsweise ausgespeicherte Menge NOₓ, so wird F so gewählt, dass maximal 90 % der theoretisch berechneten vollständigen Regeneration im Zuge der ersten Phase Δt_{R,1} durchgeführt wird.

Eine Lage des Lambdawertes während der ersten Phase Δt_{R,1} liegt hier exemplarisch bei Lambda = 0,8. Dieser Wert kann selbstverständlich den jeweiligen Erfordernissen angepasst werden, so dass an dieser Stelle lediglich bevorzugte Bereiche von 0,7 bis 0,95, insbesondere 0,75 bis 0,9 angegeben werden können. Während der ersten Phase Δt_{R,1} fällt die Kurve 34 stark ab, da der Reduktionsmittelmassenstrom m(dot)_{R,1} entsprechend hoch ist. Da jedoch die Reduktionsmittel weitestgehend zur Konvertierung des eingelagerten NOₓ verbraucht werden, pendelt sich der Lambdawert stromab des NOₓ-Speicherkatalysators 16 auf einen Wert um λ = 1 ein.

In einer sich anschließenden zweiten Phase Δt_{R,2} wird nun ein deutlich niedrigerer Reduktionsmittelmassenstrom m(dot)_{R,2} als während der ersten Phase Δt_{R,1} vorgegeben, und zwar solange, bis durch die Messeinrichtung 18 ein Regenerationsende angezeigt wird. Die Regeneration ist zufriedenstellend beendet, wenn beispielsweise ein vorgebbarer fetter Schwellenart für Lambda stromab des NOₓ-Speicherkatalysators 16 unterschritten wird.

Auch während der zweiten Phase Δt_{R,2} wird als Führungsgröße ein Sollverlauf für Lambda vor dem NOₓ-Speicherkatalysator 16 vorgegeben. Der Sollverlauf der Kurve 30 im Bereich der zweiten Phase Δt_{R,2} führt hier zunächst zu einem sprunghaften Anstieg des Lambdawertes in Richtung Lambda = 1, um den Reduktionsmittelmassenstrom m(dot)_{R,2} schnell zu verringern. Danach verflacht die Kurve 30. Alternativ zur gezeigten Soll-Verlaufsführung kann Lambda auch rampenförmig angehoben werden. Ist eine möglichst kurze Gesamtdauer Δt_{R} für die weitestgehend vollständige Regeneration angestrebt, so wird ein Maximalwert für den Sollverlauf so gewählt, dass dieser voraussichtlich erst nach einem zu erwartenden Reduktionsmitteldurchbruch erreicht würde. Sollen dagegen die Emissionen minimiert werden, muss die Steigerung des Soll-Verlaufes geringer sein und der Maximalwert kann dann derart gewählt werden, dass ein voraussichtlich noch vor einem zu erwartenden Reduktionsmitteldurchbruch erreicht wird. In jedem Falle ist aber der Verlauf der Kurve 34 für die NOₓ-Beladung im Bereich der zweiten Phase Δt_{R,2} abgeflacht. Mit sinkendem Reduktionsmittelmassenstrom m(dot)_{R,2} ist dann auch eine Übersteuerung vermindert. Der Lambdawert in der zweiten Phase Δt_{R,2} liegt vorzugsweise in einem Bereich 0,8 bis 1,0, insbesondere 0,9 bis 0,97.

Insgesamt wird deutlich, dass der überwiegende Teil der Regeneration während der ersten Phase Δt_{R,1} geleistet wird und die Phase Δt_{R,2} nur einen kleinen Anteil zur Gesamtdauer Δt_{R} der Regeneration beiträgt. Da der Reduktionsmittelmassenstrom m(dot)_{R,2} niedrig ist, resultiert auch nur ein vemachlässigbar geringer Reduktionsmitteldurchbruch.

### BEZUGSZEICHENLISTE

- 10: Verbrennungskraftmaschine
- 12: Abgasstrang
- 14: Vorkatalysator
- 16: NOₓ-Speicherkatalysator
- 18,19: gassensitive Messeinrichtungen
- 20: Motorsteuergerät
- 22: Steuereinheit
- 30: Verlauf von Lambda vor dem NOₓ-Speicherkatalysator während der Regeneration
- 32: Verlauf von Lambda stromab des NOₓ-Speicherkatalysators während der Regeneration
- 34: Verlauf der NOₓ-Beladung während der Regeneration
- m(dot)_{R,1}: Reduktionsmittelmassenstrom in der ersten Phase
- m(dot)_{R,2}: Reduktionsmittelmassenstrom in der zweiten Phase
- Δt_{R}: tatsächliche Gesamtdauer der Regeneration
- Δt_{R,th}: theoretische Gesamtdauer der Regeneration
- Δt_{R,1}: erste Phase
- Δt_{R,2}: zweite Phase
- F: Bruchteil einer berechneten vollständigen Regeneration

## Patentansprüche

1. Verfahren zur Durchführung einer Regeneration eines NOₓ-Speicherkatalysators im Abgasstrang einer Verbrennungskraftmaschine, bei dem ein Arbeitsmodus der Verbrennungskraftmaschine mit Hilfe einer im Abgasstrang angeordneten gassensitiven Messeinrichtung regelbar ist und zur Regeneration des NOₓ-Speicherkatalysators ein fetter oder stöchiometrischer Arbeitsmodus vorgeben wird, **dadurch gekennzeichnet, dass**
(a) die Regeneration in einer ersten Phase (Δt_{R,1}) unter Vorgabe eines Reduktionsmittelmassenstroms (m(dot)_{R,1}) durchgeführt wird, der anhand eines modellierten Katalysatorzustandes vor Einleitung der Regeneration bestimmt wird, wobei eine Dauer der ersten Phase (Δt_{R,1}) derart festgelegt wird, dass sie zu einer Teilregeneration entsprechend einem vorgebbaren Bruchteil (F) einer berechneten vollständigen Regeneration führt, und
(b) in einer sich anschließenden zweiten Phase (Δt_{R,2}) ein niedrigerer Reduktionsmittelmassenstrom (m(dot)_{R,2}) als während der ersten Phase (Δt_{R,1}) vorgegeben wird, bis durch eine gassensitive Messeinrichtung (18) stromab des NOₓ-Speicherkatalysators (16) ein Regenerationsende angezeigt wird.

2. Verfahren nach Anspruch 1, **dadurch gekennzeichnet, dass** eine Steuerung oder Regelung der Reduktionsmittelmassenströme (m(dot)_{R,1}, m(dot)_{R,2}) während der Regeneration anhand eines stromauf des NOₓ-Speicherkatalysators (16) gemessenen Lambdawertes erfolgt (Führungsgröße).

3. Verfahren nach Anspruch 2, **dadurch gekennzeichnet, dass** das Abgas während der ersten Phase (Δt_{R,1}) einen Lambdawert im Bereich von 0,7 bis 0,95, insbesondere 0,75 bis 0,9, aufweist.

4. Verfahren nach Anspruch 2, **dadurch gekennzeichnet, dass** das Abgas während der zweiten Phase (Δt_{R,2}) einen Lambdawert im Bereich von 0,8 bis 1,0, insbesondere 0,9 bis 0,97, aufweist.

5. Verfahren nach einem der Ansprüche 1 bis 4, **dadurch gekennzeichnet, dass** der Bruchteil (F) für die Bestimmung der Dauer (Δt_{R,1}) in Abhängigkeit von einem Katalysatorzustand und/oder einer Genauigkeit des zugrunde liegenden Modells bestimmt wird.

6. Verfahren nach Anspruch 5, **dadurch gekennzeichnet, dass** der Bruchteil (F) im Bereich von 50 bis 97 %, insbesondere 80 bis 95 %, der berechneten vollständigen Regeneration liegt.

7. Verfahren nach einem der Ansprüche 1 bis 6, **dadurch gekennzeichnet, dass** während der zweiten Phase (Δt_{R,2}) als Führungsgröße ein Sollverlauf mit steigendem Lambdawert stromauf vom NOₓ-Speicherkatalysator (16) vorgegeben wird.

8. Verfahren nach Anspruch 7, **dadurch gekennzeichnet, dass** ein Maximalwert für den Sollverlauf so gewählt wird, dass dieser voraussichtlich noch vor einem zu erwartenden Reduktionsmitteldurchbruch erreicht wird (Emissionsoptimierung).

9. Verfahren nach Anspruch 7, **dadurch gekennzeichnet, dass** ein Maximalwert für den Sollverlauf so gewählt wird, dass dieser voraussichtlich erst nach einem zu erwartenden Reduktionsmitteldurchbruch erreicht würde (Zeit-Nerbrauchsoptimierung)

10. Vorrichtung zur Durchführung einer Regeneration eines NOₓ-Speicherkatalysators im Abgasstrang einer Verbrennungskraftmaschine, bei dem ein Arbeitsmodus der Verbrennungskraftmaschine mit Hilfe einer im Abgasstrang angeordneten gassensitiven Messeinrichtung regelbar ist und zur Regeneration des NOₓ-Speicherkatalysators ein fetter oder stöchiometrischer Arbeitsmodus vorgeben wird, **dadurch gekennzeichnet, dass** Mittel vorhanden sind, mit denen
(a) die Regeneration in einer ersten Phase (Δt_{R,1}) unter Vorgabe eines Reduktionsmittelmassenstroms (m(dot)_{R,1}) durchgeführt wird, der anhand eines modellierten Katalysatorzustandes vor Einleitung der Regeneration bestimmt wird, wobei eine Dauer der ersten Phase (Δt_{R,1}) derart festgelegt wird, dass sie zu einer Teilregeneration entsprechend einem vorgebbaren Bruchteil (F) einer berechneten vollständigen Regeneration führt, und
(b) in einer sich anschließenden zweiten Phase (Δt_{R,2}) ein niedrigerer Reduktionsmittelmassenstrom (m(dot)_{R,2}) als während der ersten Phase (Δt_{R,1}) vorgegeben wird, bis durch eine gassensitive Messeinrichtung (18) stromab des NOₓ-Speicherkatalysators (16) ein Regenerationsende angezeigt wird.

11. Vorrichtung nach Anspruch 10, **dadurch gekennzeichnet, dass** die Mittel eine Steuereinheit (22) umfassen, in der ein Programm zur Steuerung der Verfahrensschritte während der Regeneration des NOₓ-Speicherkatalysators (16) in elektronisch lesbarer Form hinterlegt ist.

12. Vorrichtung nach Anspruch 11, **dadurch gekennzeichnet, dass** die Steuereinheit (22) in ein Motorsteuergerät (20) integriert ist.

13. Vorrichtung nach Anspruch 10, **dadurch gekennzeichnet, dass** die gassensitiven Messeinrichtungen (18, 19) stromauf und/oder stromab des NOₓ-Speicherkatalysators (16) Lambdasonden, NOₓ-Sensoren, HC-Sensoren, CO-Sensoren und H₂-Sensoren umfassen.

## Claims

1. Method for carrying out regeneration of an NOₓ storage catalytic converter in the exhaust section of an internal combustion engine, in which a working mode of the internal combustion engine can be controlled with the aid of a gas-sensitive measurement device arranged in the exhaust section, and a rich or stoichiometric working mode is predetermined for regeneration of the NOₓ storage catalytic converter, **characterized in that**
(a) the regeneration in a first phase (Δt_{R,1}) is carried out with a predetermined mass flow of reducing agent (m(dot)_{R,1}), which is determined on the basis of a modelled catalytic converter state prior to initiation of the regeneration, with a duration of the first phase (Δt_{R,1}) being defined such that it leads to a partial regeneration corresponding to a predeterminable fraction (F) of a calculated complete regeneration, and
(b) in a subsequent second phase (Δt_{R,2}), a lower mass flow of reducing agent (m(dot)_{R,2}) than during the first phase (Δt_{R,1}) is predetermined, until a gas-sensitive measurement device (18) downstream of the NOₓ storage catalytic converter (16) indicates that the regeneration is at an end.

2. Method according to Claim 1, **characterized in that** the mass flows of reducing agent (m(dot)_{R,1}, m(dot)_{R,2}) are controlled during the regeneration on the basis of a lambda value (guide variable) measured upstream of the NOₓ storage catalytic converter (16).

3. Method according to Claim 2, **characterized in that**, during the first phase (Δt_{R,1}), the exhaust gas has a lambda value in the range from 0.7 to 0.95, in particular 0.75 to 0.9.

4. Method according to Claim 2, **characterized in that**, during the second phase (Δt_{R,2}), the exhaust gas has a lambda value in the range from 0.8 to 1.0, in particular 0.9 to 0.97.

5. Method according to one of Claims 1 to 4, **characterized in that** the fraction (F) for determining the duration (Δt_{R,1}) is determined as a function of a catalytic converter state and/or the accuracy of the underlying model.

6. Method according to Claim 5, **characterized in that** the fraction (F) is in the range from 50 to 97%, in particular 80 to 95%, of the calculated complete regeneration.

7. Method according to one of Claims 1 to 6, **characterized in that**, during the second phase (Δt_{R,2}), a desired profile with a rising lambda value upstream of the NOₓ storage catalytic converter (16) is predetermined as the guide variable.

8. Method according to Claim 7, **characterized in that** a maximum value for the desired profile is selected in such a way that this value is forecast still to be reached before the expected breakthrough of reducing agent (emission optimization).

9. Method according to Claim 7, **characterized in that** a maximum value for the desired profile is selected in such a way that this would be forecast only to be reached after an expected breakthrough of reducing agent (time/consumption optimization).

10. Apparatus for carrying out regeneration of an NOₓ storage catalytic converter in the exhaust section of an internal combustion engine, in which a working mode of the internal combustion engine can be controlled with the aid of a gas-sensitive measurement device arranged in the exhaust section, and a rich or stoichiometric working mode is predetermined for regeneration of the NOₓ storage catalytic converter, **characterized in that** there are means by which
(a) the regeneration in a first phase (Δt_{R,1}) is carried out with a predetermined mass flow of reducing agent (m(dot)_{R,1}), which is determined on the basis of a modelled catalytic converter state prior to initiation of the regeneration, with a duration of the first phase (Δt_{R,1}) being defined such that it leads to a partial regeneration corresponding to a predeterminable fraction (F) of a calculated complete regeneration, and
(b) in a subsequent second phase (Δt_{R,2}), a lower mass flow of reducing agent (m(dot)_{R,2}) than during the first phase (Δt_{R,1}) is predetermined, until a gas-sensitive measurement device (18) downstream of the NOₓ storage catalytic converter (16) indicates that the regeneration is at an end.

11. Apparatus according to Claim 10, **characterized in that** the means comprise a control unit (22) in which a program for controlling the method steps during the regeneration of the NOₓ storage catalytic converter (16) is stored in electronically readable form.

12. Apparatus according to Claim 11, **characterized in that** the control unit (22) is integrated in an engine control unit (20).

13. Apparatus according to Claim 10, **characterized in that** the gas-sensitive measurement devices (18, 19) comprise lambda sensors, NOₓ sensors, HC sensors, CO sensors and H₂ sensors upstream and/or downstream of the NOₓ storage catalytic converter (16).

## Revendications

1. Procédé de mise en oeuvre de la régénération d'un catalyseur à accumulation de NOₓ dans un tuyau d'échappement d'un moteur à combustion interne, dans lequel le mode de travail du moteur à combustion interne peut être régulé à l'aide d'un dispositif de mesure sensible aux gaz, agencé dans le tuyau d'échappement et dans lequel un mode de travail riche ou stoechiométrique est prédéterminé pour la régénération du catalyseur à accumulation de NOₓ, **caractérisé en ce que**
(a) la régénération est effectuée dans une première phase (Δt_{R,1}) par apport d'un écoulement massique d'agent réducteur (m(dot)_{R,1}) qui est déterminé en rapport à l'état modélisé du catalyseur avant le début de la régénération, la durée de la première phase (Δt_{R,1}) étant fixée de façon à obtenir une régénération partielle qui correspond à une fraction (F) prédéterminable d'une régénération complète calculée et
(b) dans une deuxième phase (Δt_{R,2}) qui suit, un écoulement massique d'agent réducteur (m(dot)_{R,2}), plus petit que celui de la première phase (Δt_{R,1}), est apporté jusqu'à ce qu'un dispositif de mesure (18) sensible aux gaz agencé en aval du catalyseur (16) à accumulation de NOₓ indique la fin de la régénération.

2. Procédé selon la revendication 1, **caractérisé en ce qu'**une commande ou une régulation des écoulements massiques d'agent réducteur (m(dot)_{R,1}, m(dot)_{R,2}) sont effectuées au cours de la régénération sur base d'une valeur lambda (grandeur de guidage) mesurée en amont du catalyseur (16) à accumulation de NOₓ.

3. Procédé selon la revendication 2, **caractérisé en ce que** lors de la première phase (Δt_{R,1}), le gaz d'échappement présente une valeur lambda située dans la plage comprise entre 0,7 et 0,95 et en particulier entre 0,75 et 0,9.

4. Procédé selon la revendication 2, **caractérisé en ce que** lors de la deuxième phase (Δt_{R,2}), le gaz d'échappement présente une valeur lambda située dans une plage comprise entre 0,8 et 1,0 et en particulier entre 0,9 et 0,97.

5. Procédé selon l'une des revendications 1 à 4, **caractérisé en ce que** la fraction (F) utilisée pour la détermination de la durée (Δt_{R,1}) est déterminée en fonction de l'état du catalyseur et/ou de la précision du modèle qui est à la base.

6. Procédé selon la revendication 5, **caractérisé en ce que** la fraction (F) est située dans la plage comprise entre 50 et 97 % et en particulier entre 80 et 95 % de la régénération complète calculée.

7. Procédé selon l'une des revendications 1 à 6, **caractérisé en ce que** pendant la deuxième phase (Δt_{R,2}), on prédétermine comme grandeur de guidage une évolution cible qui présente une valeur lambda croissante en amont du catalyseur (16) à accumulation de NOₓ.

8. Procédé selon la revendication 7, **caractérisé en ce qu'**une valeur maximale de l'évolution cible est sélectionnée de telle manière qu'il est prévu d'atteindre cette valeur avant une arrivée attendue d'agent réducteur (optimisation des émissions).

9. Procédé selon la revendication 7, **caractérisé en ce qu'**une valeur maximale de l'évolution cible est sélectionnée de telle manière qu'il n'est prévu d'atteindre celle-ci qu'après une arrivée attendue d'agent de réduction (optimisation de la durée et/ou de la consommation).

10. Dispositif pour effectuer la régénération d'un catalyseur à accumulation de NOₓ dans un tuyau d'échappement d'une moteur à combustion interne, dans lequel le mode de travail du moteur à combustion interne peut être régulé à l'aide d'un dispositif de mesure sensible aux gaz agencé dans le tuyau d'échappement et dans lequel un mode de travail riche ou stoechiométrique est prédéterminé pour la régénération du catalyseur à accumulation de NOₓ, **caractérisé en ce que** des moyens sont prévus avec lesquels
(a) la régénération est effectuée dans une première phase (Δt_{R,1}) par apport d'un écoulement massique d'agent réducteur (m(dot)_{R,1}) qui est déterminé en rapport à l'état modélisé du catalyseur avant le début de la régénération, la durée de la première phase (Δt_{R,1}) étant fixée de façon à obtenir une régénération partielle qui correspond à une fraction (F) prédéterminable d'une régénération complète calculée et
(b) dans une deuxième phase (Δt_{R,2}) qui suit, un écoulement massique d'agent réducteur (m(dot)_{R,2}), plus petit que celui de la première phase (Δt_{R,1}), étant apporté jusqu'à ce qu'un dispositif de mesure (18) sensible aux gaz agencé en aval du catalyseur (16) à accumulation de NOₓ indique la fin de la régénération.

11. Dispositif selon la revendication 10, **caractérisé en ce que** les moyens comprennent une unité de commande (22) dans laquelle un programme qui commande les étapes de procédé au cours de la régénération du catalyseur (16) à accumulation NOₓ est conservé sous une forme lisible électroniquement.

12. Dispositif selon la revendication 11, **caractérisé en ce que** l'unité de commande (22) est intégrée dans un appareil (20) de commande du moteur.

13. Dispositif selon la revendication 10, **caractérisé en ce que** les dispositifs de mesure (18, 19) sensibles aux gaz situés en amont et/ou en aval du catalyseur (16) à accumulation de NOₓ comprennent des sondes lambda, des détecteurs de NOₓ, des détecteurs de HC, des détecteurs de CO et des détecteurs de H₂.
